# EUROPEAN PATENT SPECIFICATION

(11) **EP 2 860 385 B1**
(45) Date of publication and mention of the grant of the patent: **02.12.2020**
(21) Application number: 14188294.4
(22) Date of filing: 09.10.2014
(51) Int. Cl.: F02M 37/22, F02M 37/00, B62K 11/00, B62J 37/00, B01D 35/00

(54) **Saddle riding type vehicle**
Sattelfahrzeug
Véhicule de type à enfourcher

(30) Priority: 09.10.2013 JP 2013212056
(43) Date of publication of application: 15.04.2015
(73) Proprietor: Yamaha Hatsudoki Kabushiki Kaisha, Iwata-shi, Shizuoka 438-8501 (JP)
(72) Inventor: Inoue, Kazuhisa, Iwata-shi, Shizuoka 438-0026 (JP)
(74) Representative: Grünecker Patent- und Rechtsanwälte PartG mbB

(56) References cited:
- EP-A1- 2 375 049
- EP-A2- 2 305 545
- EP-A2- 2 368 789
- WO-A1-2008/126476
- JP-A- 2011 256 756
- JP-A- 2013 170 464
- US-A1- 2013 247 872

## Description

This invention relates to a saddle riding type vehicle. Prior art document JP 2013-170464 A discloses a saddle riding type vehicle with a head tube, main frames connected to the head tube, a down frame connected to the head tube and disposed below the main frames, a fuel tank placed on the main frames, a fuel pump which is partly contained in the fuel tank. The fuel pump is inserted into the fuel tank from the bottom thereof, a lower part of the fuel pump is exposed outside the fuel tank. an engine is suspended from the main frames and includes a cylinder extending upward and inclined forward. A fuel injection device is disposed rearward of the cylinder of the engine. Subframes are connecting the main frames and the down frame. A fuel filter is arranged within a space between the fuel tank and a cylinder head of the engine using the space under the fuel tank for feeding fuel discharged from fuel pump forward to pass through the fuel filter and a pressure regulator, and again to pass through an area below the fuel pump. The fuel filter is arranged in front of the fuel pump. A fuel hose is connecting the fuel pump and the fuel filter. A fuel hose is connecting the fuel filter and the pressure regulator. A fuel hose is connecting the pressure regulator and the fuel pump. A fuel hose is connecting the pressure regulator and the fuel injection device.

Conventionally, the fuel tank of a saddle riding type vehicle has a fuel filter and a fuel pump arranged inside the fuel tank, and gasoline which is a fuel is supplied from the fuel tank.

In recent years, however, a composite fuel which is a mixture of gasoline and ethanol or an alcohol fuel consisting only of ethanol has been used occasionally. Ethanol generates gel-like impurities in fuel, which cause clogging of an internal fuel filter mounted inside the fuel tank. With such clogging, changing of the internal fuel filter is troublesome. So, besides the internal fuel filter in the fuel tank, a fuel filter is provided outside the fuel tank. This can improve maintainability. In JP 2011-256756 A, a saddle riding type vehicle with a fuel filter provided outside a fuel tank is described. The fuel in the fuel tank flows into the internal fuel filter, a fuel pump, the fuel filter, and to a fuel injection device or carburetor. The respective parts are interconnected by fuel hoses.

Technique of JP 2011-256756 A

The fuel filter described in JP 2011-256756 A is attached to the bottom of the fuel tank and above an engine cylinder head.

According to the technique of JP 2011-256756 A, both the fuel pump and the fuel filter are attached to the fuel tank. Consequently, the fuel hose between the fuel pump and the fuel filter is short. However, the bend radius permitted when the fuel hose is short becomes large. Further, when the fuel hose is short, a bend portion of the fuel hose undergoes excessive stress, and it is necessary to protect the bend portion. In JP 2011-256756 A, as shown in Fig. 1, the fuel filter overlaps a body frame when seen from a side of the vehicle body. Consequently, when changing the fuel filter, it is necessary to remove the fuel tank from the body frame once. This poses a problem of increased workload at the time of changing the fuel filter.

This invention has been made having regard to the state of the art noted above, and its object is to provide a saddle riding type vehicle which allows a fuel filter to be changed without removing a fuel tank from a main frame. According to the present invention said object is solved by a saddle riding type vehicle having the features of independent claim 1. Preferred embodiments are laid down in the dependent claims.

Accordingly, it is provided a two-wheeled motor vehicle comprising a head tube; main frames connected to the head tube; a down frame connected to the head tube and disposed below the main frames; a fuel tank placed on the main frames; an engine suspended from the main frames; and a fuel filter which, as seen from a side, is disposed in an area surrounded by the head tube, the main frames and the down frame, and in a position not overlapping any one of the main frames, the down frame and the engine.

Accordingly, it is provided that, the fuel filter, as seen from a side, is disposed in an area surrounded by the head tube, main frames and down frame. Further, the fuel filter, as seen from a side, is disposed in a position not overlapping any one of the main frames, down frame and engine. Consequently, when covers such as cowls and air scoops are removed from the main frames, the fuel filter can be accessed from a side of the vehicle body, thereby to facilitate changing of the fuel filter. Thus, the fuel filter can be changed without removing the fuel tank from the main frames. Further, the degree of freedom for arranging fuel hoses connected to the fuel filter can be increased, and the bend radius of the fuel hoses can be decreased. This prevents bend portions of the fuel hoses from undergoing excessive stress, and makes it unnecessary to protect the bend portions.

It is preferred that the fuel filter has a cylindrical shape and has a central axis extending transversely of a vehicle body. Since the central axis of the fuel filter extends transversely of the vehicle body, removal of the fuel hoses connected to the fuel filter can be done laterally of the vehicle body. This facilitates removal of the fuel hoses.

It is preferred that the vehicle comprises subframes connecting the main frames and the down frame; and a bracket extending downward from the subframes; wherein the fuel filter is attached to the subframes through the bracket. This construction allows the fuel filter to be attached below the subframes, whereby space above the subframes and above the fuel filter can be used effectively.

It is preferred that the fuel filter is covered with an elastic element, and is inserted in and attached to the bracket. Because of the plug-in type, the fuel filter can be removed from the bracket easily. The elastic element covering the fuel filter can protect the fuel filter from flying objects.

It is preferred that the fuel filter has a direction of insertion corresponding to a longitudinal direction of the vehicle body. Consequently, the fuel filter can be removed easily from the bracket by accessing the fuel filter from a side of the vehicle body, and moving the fuel filter in the longitudinal direction of the vehicle body.

It is preferred that the elastic element has a through-hole; and the bracket has a lug; wherein the fuel filter is fixed to the bracket by inserting the lug in the through-hole. Since the fuel filter is fixable by fitting the through-hole of the elastic element on the lug of the bracket, the fuel filter can be extracted easily. Since the through-hole is formed in the elastic element, the through-hole can expand and contract when inserting in the lug, which facilitates the insertion.

In the invention described above, it is preferred that fuel hoses connected to the fuel filter have flexibility. Since the fuel hoses connected to the fuel filter have flexibility, the fuel hoses are deformable when removing the fuel filter, and the fuel hoses can be removed easily.

It is preferred that the fuel filter is disposed in a position overlapping the down frame as seen from front. The fuel filter can be protected from objects flying from the front by the down frame.

It is preferred that a pressure regulator is provided between the fuel filter and a fuel injection device; and the fuel pump and the pressure regulator are fixed to the fuel tank. When the fuel tank is removed from the main frames, the pressure regulator and fuel pump can be removed together with the fuel tank. Consequently, it is not necessary to remove the fuel hose extending between the pressure regulator and fuel pump. It is therefore not necessary to provide a check valve between the pressure regulator and fuel pump.

It is preferred that the fuel filter has different hose-attaching shapes in an upstream direction and a downstream direction. Consequently, the fuel hoses are prevented from being attached in confusion between the upstream direction and downstream direction of the fuel filter.

It is preferred that the vehicle comprises connectors for connecting the fuel filter and the fuel hoses; wherein one of the connectors in the upstream direction and the downstream direction is connected also to the bracket. This can prevent the fuel hoses from being attached in confusion between the upstream direction and downstream direction of the fuel filter, and prevent falling of the fuel filter even when the fuel filter comes off the plugging lug by vibration.

It is preferred that, as seen from above, at least one end of a connection width of the fuel filter and the fuel hoses is located outward of the main frames in the transverse direction of the vehicle body. The fuel hoses are easily removable since, as seen from above, at least one end of the connection width of the fuel filter and the fuel hoses is located outward transversely of the vehicle body. It is also possible to use the main frames having a slimmed frame width.

According to this invention, a saddle riding type vehicle can be provided which allows a fuel filter to be changed without removing a fuel tank from main frames.

### BRIEF DESCRIPTION OF THE DRAWINGS

For the purpose of illustrating the embodiment, there are shown in the drawings several forms which are presently preferred.
Figure 1 is a left side view of a two-wheeled motor vehicle according to an embodiment;
Figure 2 is a front view of the two-wheeled motor vehicle according to the embodiment;
Figure 3 is a top view of a body frame;
Figure 4 is a perspective view of the body frame seen from an obliquely rear rightward direction;
Figure 5 is a left side view of an engine and adjacent components mounted on the body frame;
Figure 6 is an enlarged view of a portion of Figure 5;
Figure 7 (a) is a side view of a fuel tank, Figure 7 (b) is a fragmentary bottom view of the fuel tank, and Figure 7 (c) is a bottom view of a fuel pump;
Figure 8 is a top view of a principal portion of the body frame;
Figure 9 is a fragmentary front view of the body frame; and
Figure 10 is a perspective view of a fuel filter.

### DESCRIPTION OF THE PREFERRED EMBODIMENTS

A preferred embodiment will be described in detail hereinafter with reference to the drawings.

A two-wheeled motor vehicle will be described here as an example of saddle riding type vehicle according to the embodiment. In the following description, front, rear, right and left are based on the traveling direction of the two-wheeled motor vehicle. Moreover, features which refers to 'as seen from a side' indicates a view left or right perpendicular to a plan being vertical in front-to-rear direction, 'as seen from a front' indicates a view from the front perpendicular to a plan being vertical in right-to-left direction, and 'as seen from above' indicates a view from above perpendicular to a plan being horizontal in front-to-rear direction side.

### 1. Outline construction of two-wheeled motor vehicle

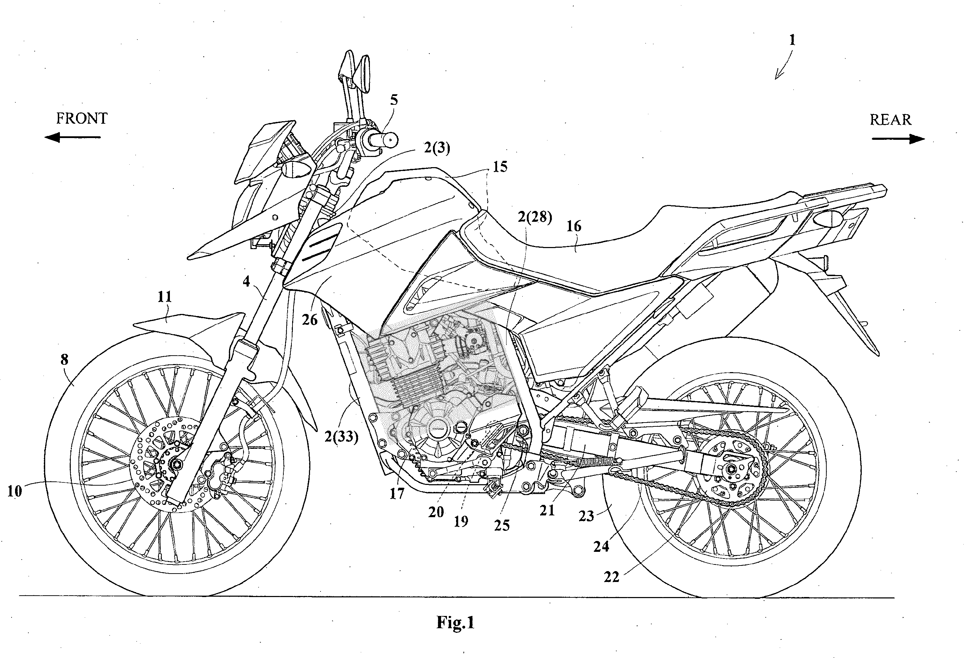

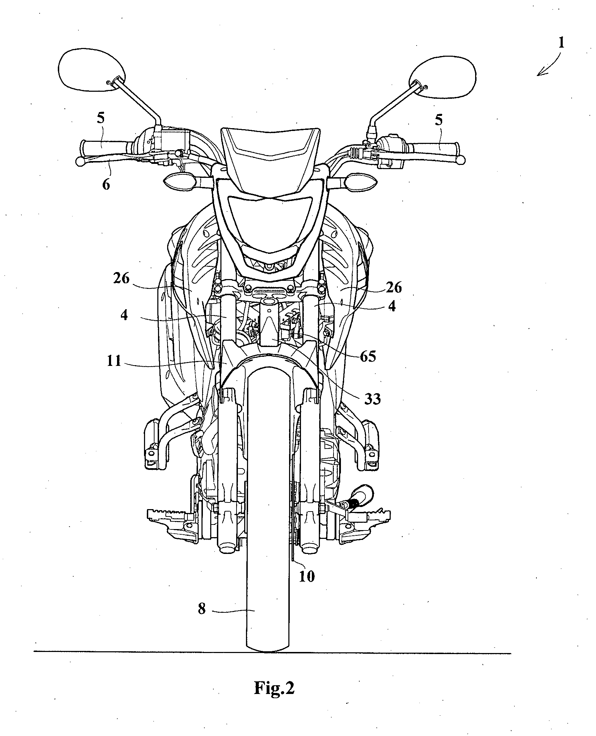

Fig. 1 is a left side view of a two-wheeled motor vehicle 1 having a body frame according to this embodiment. Fig. 2 is a front view of the two-wheeled motor vehicle. The two-wheeled motor vehicle 1 has a body frame 2. A head tube 3 is disposed in an upper front portion of the body frame 2. The head tube 3 has a pair of extendible and contractible front forks 4 rotatably attached thereto. A handlebar 5 is connected to upper portions of the front forks 4. A brake lever 6 is disposed on a rightward portion of the handlebar 5. The front forks 4 are swingable by turning operation of the handlebar 5.

A front wheel 8 is rotatably attached to lower ends of the front forks 4. Vibration of the front wheel 8 is absorbed by extension and contraction of the front forks 4. A brake 10 is attached to the lower ends of the front forks 4. Rotation of the front wheel 8 is braked by operation of the brake lever 6. A front wheel cover 11 is fixed to the front forks 4 above the front wheel 8.

A fuel tank 15 and a seat 16 are held as arranged fore and aft on an upper portion of the body frame 2. An engine 17 is held by the body frame 2 below the fuel tank 15. Power generated by the engine 17 is outputted by a drive shaft 19. A drive sprocket 20 is connected to the drive shaft 19.

A swing arm 21 is swingably supported by a lower rear portion of the body frame 2. A driven sprocket 22 and a rear wheel 23 are rotatably supported at a rear end of the swing arm 21. A chain 24 extends between and is wound around the drive sprocket 20 and driven sprocket 22. The power generated by the engine 17 is transmitted to the rear wheel 23 through the drive shaft 19, drive sprocket 20, chain 24 and driven sprocket 22. Cowls 26 are attached rightward and leftward of the upper portion of the body frame 2 and rightward and leftward of the fuel tank 15.

### 2. Construction of body frame

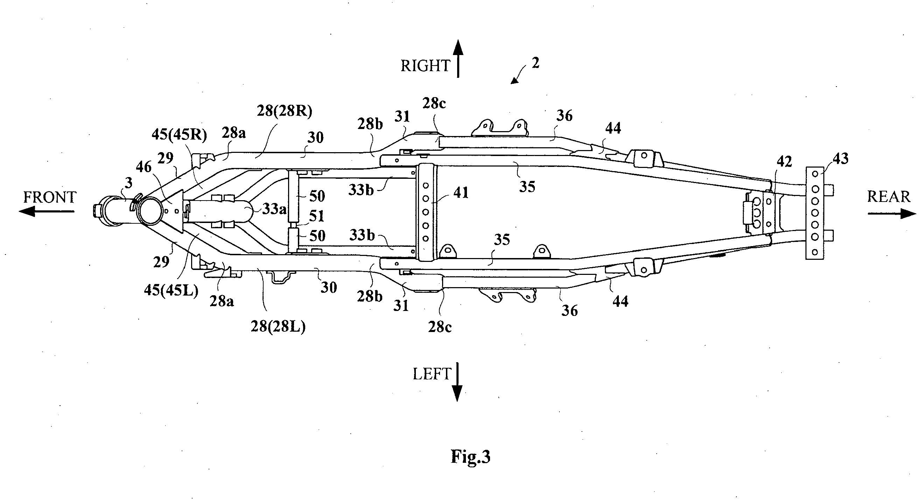

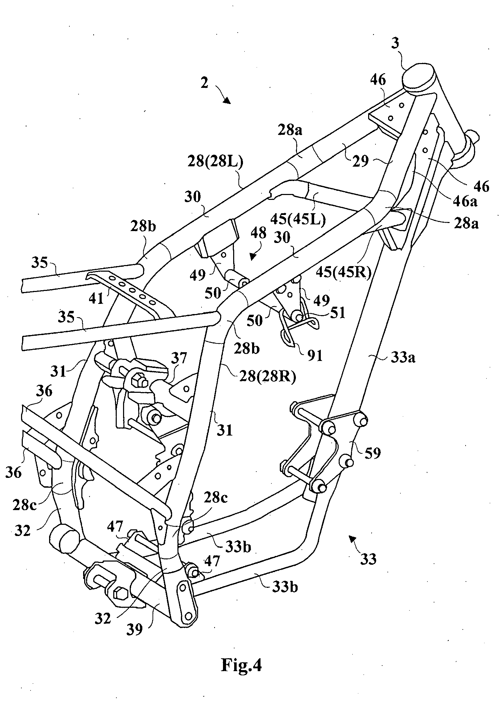

Next, the construction of the body frame provided for the two-wheeled motor vehicle 1 will be described with reference to Figs. 3 and 4. Fig. 3 is a top view of the body frame. Fig. 4 is a perspective view of the body frame seen from an obliquely rear rightward direction.

The body frame 2 includes the head tube 3, main frames 28, a down frame 33 and seat frames 35. The main frames 28, down frame 33 and seat frames 35 are formed of pipe having a circular section, which is easy to bend and allows the body frame 2 to be manufactured at low cost.

The main frames 28 are formed of a pair of right and left pipes 28L and 28R, and are connected to an upper part of the head tube 3 by welding. The main frames 28 extend from the head tube 3 in a way to spread transversely outward of the vehicle body. Soon the main frames 28 extend parallel and rearward from first curved portions 28a, and then from second curved portions 28b, bend and extend downward and transversely outward of the vehicle body. The main frames 28 are connected at the second curved portions 28b to the seat frames 35. The main frames 28 extending downward from the second curved portions 28b bend at third curved portions 28c and extend forward and downward therefrom. A pivot shaft 25 is attached to front parts of the third curved portions 28c to act as swing axis of the swing arm 21.

The main frames 28 include first frame enlarging portions 29 which extend from the head tube 3 to the first curved portions 28a, first frame parallel portions 30 which extend from the first curved portions 28a to the second curved portions 28b, second frame enlarging portions 31 which extend from the second curved portions 28b to the third curved portions 28c, and second frame parallel portions 32 which extend from the third curved portions 28c to lower ends. In the second frame enlarging portions 31, an upper cross member 37 is connected between the pipes 28L and 28R (see Fig. 4). At the lower ends of the main frames 28 below the third curved portions 28c, a lower cross member 39 is connected between the pipes 28L and 28R. Thus, the cross members between the pipes 28L and 28R are arranged below the second curved portions 28b of the main frames 28. Therefore, in the main frames 28, no cross member is provided for the first frame enlarging portions 29 or the first frame parallel portions 30. In other words, no cross member is provided on the main frames 28 forward of the connections with the seat frames 35.

The down frame 33 includes one down tube 33a connected to a lower part of the head tube 3 by welding, and down subtubes 33b connected to a lower part of the down tube 33a by welding. The down frame 33 is disposed below the main frames 28. The down subtubes 33b, which are formed of a pair of right and left pipes extending rearward, are connected to the lower end of the down tube 33a by welding. The down subtubes 33b extend from the down tube 33a in a way to spread transversely outward of the vehicle body, and soon extend rearward and parallel to each other. Rear ends of the down subtubes 33b are connected to the lower cross member 39. Thus, the body frame 2 is a semidouble cradle type frame which has the two pipes 28L and 28R of the main frames 28 and one down tube 33a extending from the head tube 3.

The seat frames 35 are formed of a pair of right and left pipes extending rearward from the second curved portions 28b of the main frames 28. Between these pipes, a first rear cross member 41, a second rear cross member 42 and a third rear cross member 43 are connected. Rear subframes 36 are connected to upper parts of the third curved portions 28c of the main frames 28. The rear subframes 36 extend upward and rearward from the main frames 28 and are connected to rear parts of the seat frames 35. Reinforcing plates 44 are connected between the seat frames 35 and rear subframes 36.

A gadget 46 is connected by welding to a rear surface of the head tube 3, inner surfaces at the front ends of the main frames 28 and an inner surface at the front end of the down tube 33a. The gadget 46 reinforces the connections between the head tube 3, main frames 28 and down frame 33. The gadget 46 has, in a rear part thereof, a recess 46a curved forward.

Subframes 45 are connected between the main frames 28 and down frame 33 through the gadget 46. The subframes 45 have a pair of right and left pipes 45L and 45R. The subframes 45 extend forward, downward and transversely inward of the vehicle body from front portions of the first frame parallel portions 30 of the main frames 28, and are connected to the gadget 46 by welding. The subframes 45 may be connected directly to the down tube 33a instead of being welded to the gadget 46. The recess 46a of the gadget 46 is formed between a connection between the gadget 46 and main frames 28 and a connection between the gadget 46 and subframes 45.

The subframes 45 are connected from the main frames 28 to the one down tube 33a extending downward from the head tube 3, thereby to be able to improve the rigidity in the transverse direction of the body frame 2. The subframes 45 are turned more inward transversely of the vehicle body when the right and left subframes are connected to one down tube extending downward from the head tube, than when, in a frame structure having two down tubes extending downward from the head tube, the subframes are connected to the respective down tubes. Thus, the body frame 2 can further improve rigidity against loads acting transversely of the vehicle body.

The main frames 28 have a bracket 48 for suspending the engine 17. The bracket 48 extends forward and downward from middle parts of the frame parallel portions 30 of the main frames 28. The bracket 48 has a pair of right and left stays 49 extending downward from the main frames 28, respectively, collars 50 connected to the pair of right and left stays 49, and a bolt 51 inserted in the collars 50 and connecting the stays 49.

The engine 17 is fixed to the down tube 33a by a bracket 59 provided on a lower part of the down tube 33a, and is fixed to the down subtubes 33b by brackets 47 provided on rear parts of the down subtubes 33b.

### 3. Construction of engine and fuel supply line

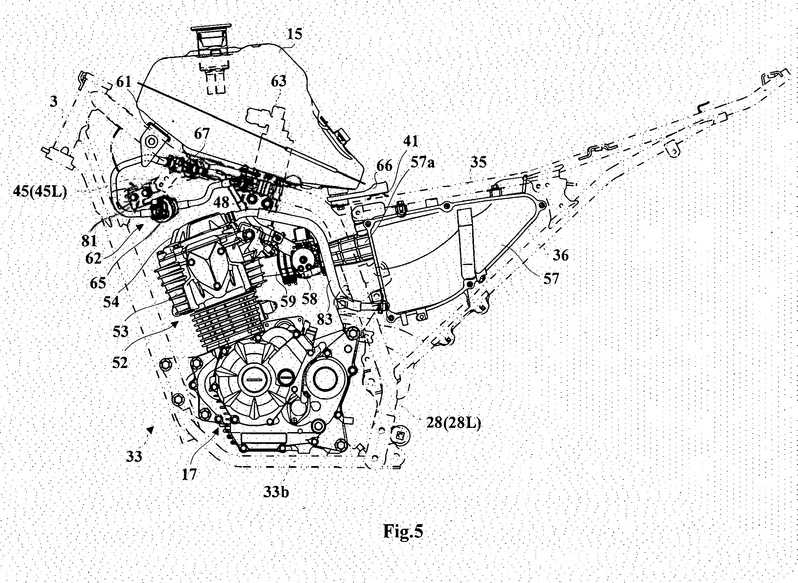

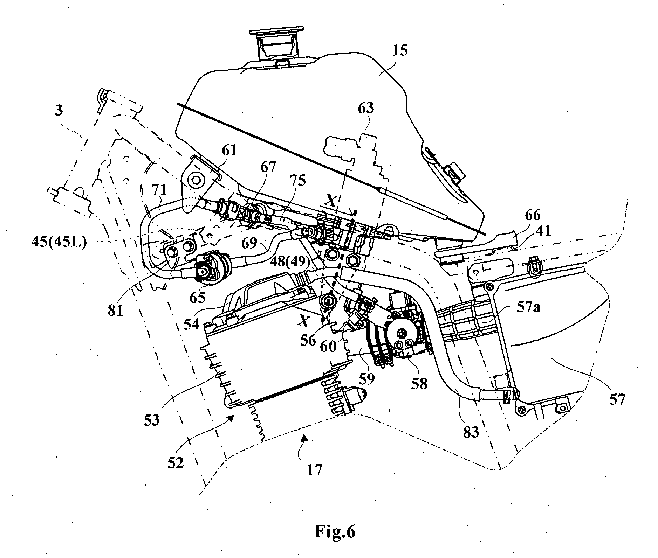

Next, constructions of the engine and a fuel supply line provided for the two-wheeled motor vehicle 1 will be described with reference to Figs. 5 and 6. Fig. 5 is a left side view of the engine and adjacent components mounted on the body frame. Fig. 6 is an enlarged view of a portion of Fig. 5. In Fig. 5, the body frame 2 is shown in two-point chain lines.

The engine 17 has a cylinder 52 extending upward, and is fixed to the body frame 2 with the cylinder 52 inclined forward. The engine 17 is suspended from the main frames 28 through the bracket 48 upward and rearward of the cylinder 52, and is supported in a forward tilting position by the main frames 28 and down frame 33. The cylinder 52 has a cylinder head 53 and a head cover 54. The engine 17 is suspended with the bolt 51 placed to extend through a boss 56 provided in a rear part of the cylinder head 53, the bolt 51 being tightened to the stays 49, whereby the collars 50 hold the boss 56 in between. Consequently, the suspension members of the engine 17 fit within the width of the main frames 28, and the suspension members can thus save space.

Since the engine 17 assumes the forward tilting position, and is suspended from the engine-suspending bracket 48 extending downward from the main frames 28, even the highest position of the engine 17 can secure space with the fuel tank 15. Since the rear part of the cylinder head 53 is suspended by the bracket 48, it is unnecessary to give rigidity to the head cover 54 of the engine 17. Consequently, the head cover made of resin is employable, thereby to realize weight saving and low cost of the head cover 54. A breather tube 83 disposed above the collars 50 is connected to the cylinder head 53.

An air cleaner box 57 is disposed in area surrounded by the main frames 28, seat frames 35 and rear subframes 36. A joint 57a extends forward from the air cleaner box 57, and is connected through a throttle body 58 to an intake manifold 59. A fuel injection device 60 is provided for the intake manifold 59 to have a fuel injection port directed toward the center of the intake manifold 59. The fuel injection device 60 is disposed rearward of the cylinder 52.

The fuel tank 15 is attached to the main frames 28 through a bracket 61 fixed to a bottom front part thereof. Bottom rear parts of the fuel tank 15 are placed on the main frames 28 through shock-absorbing members formed of rubber. A bottom rear end of the fuel tank 15 is attached to the first rear cross member 41 through a stay 66. When removing the fuel tank 15 from the main frames 28, the bracket 61 is removed with the fuel tank 15.

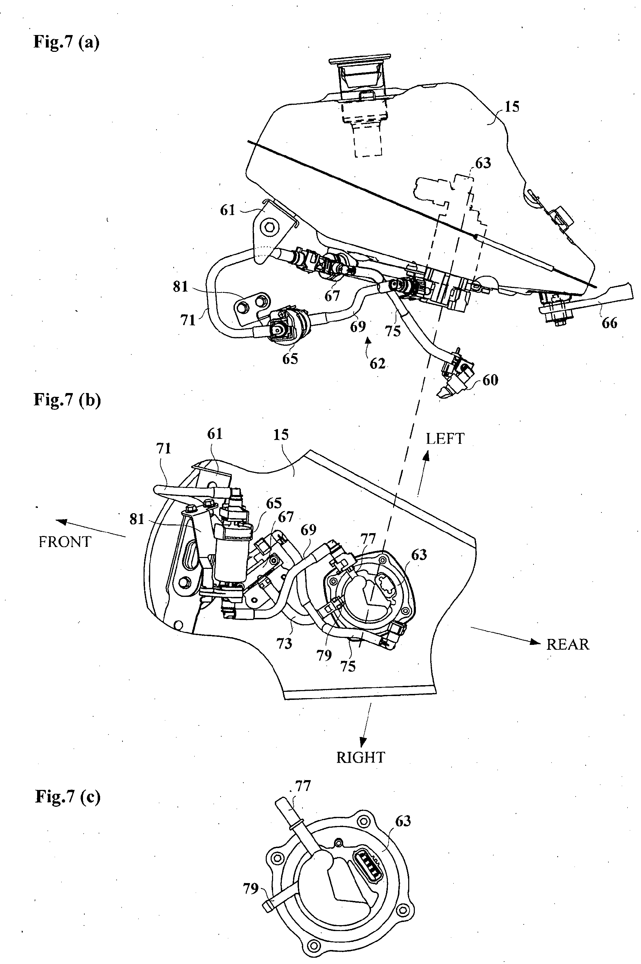

Next, reference is made to Figs. 6 and 7. Fig. 7 (a) is a side view of the fuel tank and a fuel supply system. Fig. 7 (b) is a bottom view of a portion of the fuel tank and the fuel supply system. Fig. 7 (c) is a bottom view of a fuel pump. In Fig. 7 (b), the forward end of a fuel hose 75 is in a state removed from the fuel injection device 60. A fuel supply system 62 includes a fuel pump 63 for discharging under pressure the fuel stored in the fuel tank 15, a fuel filter 65 for filtering the fuel discharged from the fuel pump 63, a pressure regulator 67 for regulating the pressure of the fuel having passed through the fuel filter 65, a fuel hose 69 connecting the fuel pump 63 and fuel filter 65, a fuel hose 71 connecting the fuel filter 65 and pressure regulator 67, a fuel hose 73 connecting the pressure regulator 67 and fuel pump 63, and a fuel hose 75 connecting the pressure regulator 67 and fuel injection device 60.

The fuel pump 63 is inserted into the fuel tank 15 from the bottom thereof. A lower part of the fuel pump 63 is exposed outside the fuel tank 15. The fuel pump 63 has a discharge nozzle 77 and an intake nozzle 79. The discharge nozzle 77 and intake nozzle 79 are arranged outside the fuel tank 15. The fuel tank 15 has an internal fuel filter (not shown). The fuel having passed through the internal fuel filter is pressurized by the fuel pump 63, passes through the discharge nozzle 77, and is discharged into the fuel hose 69.

The fuel filter 65 is fixed to the left subframe 45L by a bracket 81. The fuel filter 65, as seen from a side, is disposed in an area surrounded by the head tube 3, main frames 28 and down frame 33, and in a position not overlapping any one of the main frames 28, down frame 33 and engine 17. The fuel discharged from the fuel pump 63 passes through the fuel hose 69 to be supplied to the fuel filter 65 disposed forward of the fuel pump 63. The fuel filtered by the fuel filter 65 passes through the fuel hose 71 to be fed to the pressure regulator 67 disposed between the fuel pump 63 and fuel filter 65. The fuel flows from the fuel hose 69 through the fuel filter 65 into the fuel hose 71. Therefore, an upstream direction of the fuel filter 65 is a direction from the center of the fuel filter 65 to the discharge nozzle 77. A downstream direction of the fuel filter 65 is a direction from the center of the fuel filter 65 to the intake nozzle 79.

The pressure regulator 67 is a device for regulating the pressure of the fuel supplied to the fuel injection device 60. When the pressure of the fuel having passed through the fuel filter 65 is higher than a predetermined pressure, the pressure can be adjusted by returning the fuel from the pressure regulator 67 to the fuel pump 63 through the fuel hose 73 and intake nozzle 79. Consequently, the fuel is fed under appropriate pressure from the pressure regulator 67 to the fuel injection device 60 through the fuel hose 75. The pressure regulator 67 is fixed to the bottom of the fuel tank 15.

Thus, the fuel discharged from the fuel pump 63 is fed to the pressure regulator 67 through the discharge nozzle 77, fuel hose 69, fuel filter 65 and fuel hose 71. The fuel fed to the pressure regulator 67 is fed to the fuel injection device 60 through the fuel hose 75, and part of the fuel is returned to the fuel pump 63 through the fuel hose 73 and intake nozzle 79.

The exposed part of the fuel pump 63 is disposed in a position overlapping the main frames 28 as seen from a side, and further below this the bracket 48 for suspending the engine 17 is disposed. Consequently, sufficient space is secured between the cylinder head 53 and head cover 54 inclined forward, and the fuel pump 63. The space under the fuel tank 15 can be used effectively by feeding the fuel discharged from fuel pump 63 forward to pass through the fuel filter 65 and pressure regulator 67, and again to pass through an area below the fuel pump 63.

Since the fuel supply system 62 is arranged below the fuel tank 15, the fuel supply system 62 can be arranged compactly in a space-saving way in the space between the fuel tank 15 and engine 17. The fuel pump 63 and fuel hose 75 are arranged in the space surrounded by the pair of right and left stays 49, collars 50 and fuel tank 15. Thus, when the cowls 26 are removed, the fuel pump 63 and fuel hose 75 exposed outside can be protected from objects flying from the outside, by the stays 49, collars 50 and the engine 17 suspended from these, the fuel tank 15 and so on.

### 4. Fuel filter

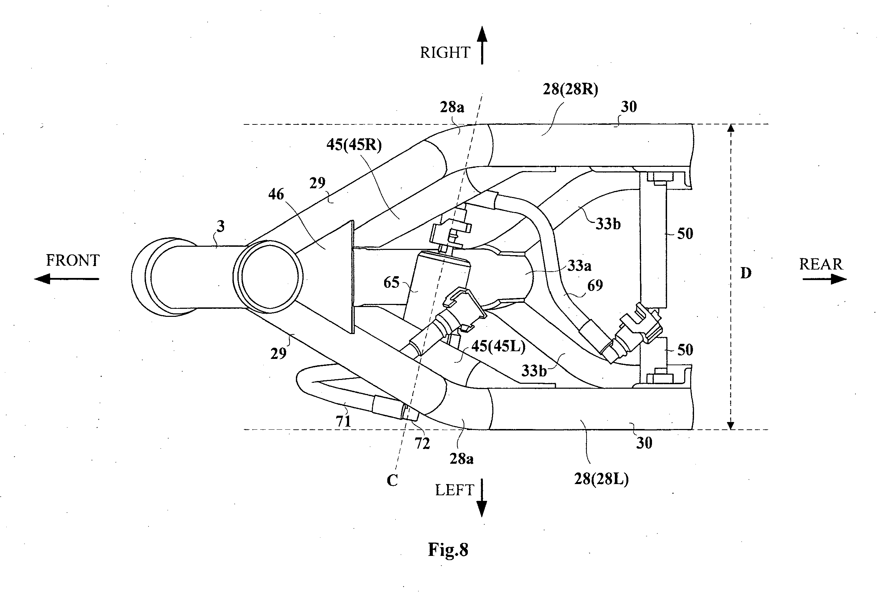

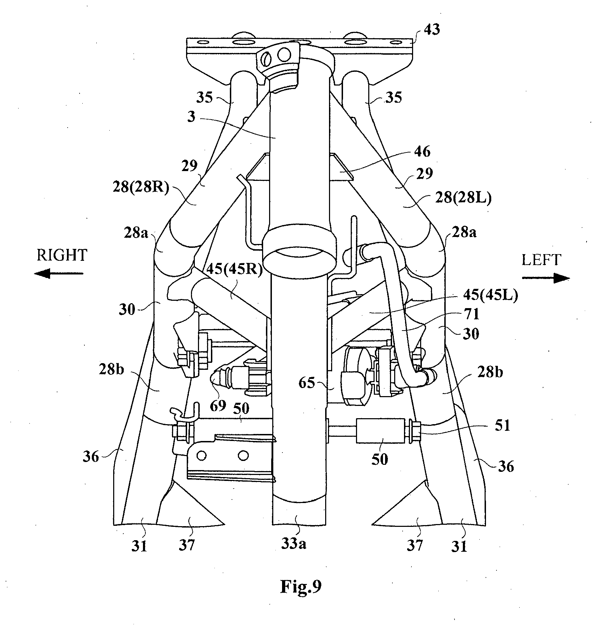

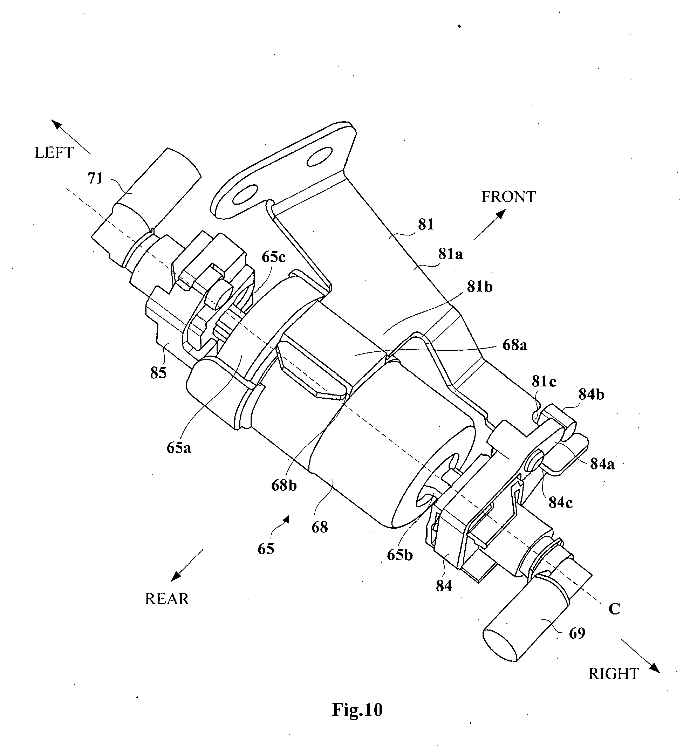

Reference is made to Figs. 8 to 10. Fig. 8 is a top view of a principal part of the body frame showing a positional relationship between the body frame and the fuel filter. Fig. 9 is a fragmentary front view of the body frame showing the positional relationship of the body frame and the fuel filter. Fig. 10 is a perspective view of the fuel filter seen from an obliquely rear rightward direction.

The fuel filter 65 has a cylindrical shape and is attached to have a central axis C extending transversely of the vehicle body. The central axis C does not need to be in strict agreement with the transverse direction, but, as shown in Fig. 8, may be slightly inclined relative to the transverse direction. As seen from front, the fuel filter 65 is disposed in a position overlapping the down frame 33. Since the fuel filter 65 is disposed behind the down tube 33a, it is protected from objects flying from the front by the down frame 33. Consequently, the fuel filter 65 is prevented from getting damaged.

Referring to Fig. 8, in a connection width of the fuel filter 65 and the fuel hoses 69 and 71, an end 72 connected to the fuel hose 71 protrudes outward transversely of the vehicle body from the first frame enlarging portion 29 of the main frame 28L. That is, one end of the connection width of the fuel filter 65 and the fuel hoses 69 and 71 is located outward transversely of the vehicle body from the main frames 28 which cross the central axis C of the fuel filter 65. Since this allows the fuel hose 71 to be removed in a position outward of the body frame 2, the fuel hose 71 can be removed with ease. Thus, the fuel hoses are easily removable when, as seen from above, at least one end of the connection width of the fuel filter 65 and the fuel hoses 69 and 71 is located outward transversely of the vehicle body from the pair of main frames 28. It is also possible to use the main frames 28 having a slimmed frame width.

In this embodiment, in the connection width of the fuel filter 65 and the fuel hose 69 and 71, the end 72 connected to the fuel hose 71 is located inward transversely of the vehicle body from the frame parallel portion 30 of the main frame 28L. That is, as seen from above, the connection width of the fuel filter 65 and the fuel hoses 69 and 71 is fitted within a width D between the right and left frame parallel portions 30 of the main frames 28. In other words, as seen from above, the connection width of the fuel filter 65 and the fuel hoses 69 and 71 is shorter than a maximum width of the main frames 28 and is located inward transversely of the vehicle body from the maximum width of the main frames 28. Consequently, the fuel filter 65 and the fuel hoses 69 and 71 are protected by the main frames 28 against shocks acting in the transverse direction from outside. The fuel hoses 69 and 71 are prevented from coming off the fuel filter 65 at a time of sideways turnover.

The fuel filter 65 is attached to the subframes 45 through a bracket 81 extending below the subframes 45. With the fuel filter 65 attached below the subframes 45, space above the subframes 45 and above the fuel filter 65 can be used effectively.

The fuel filter 65 includes a filter body 65a containing nonwoven fabric, an intake nozzle 65b for receiving the fuel fed from the fuel pump 63, and a discharge nozzle 65c for discharging the fuel to the pressure regulator 67. The fuel filter 65 is covered with a cover 68. The fuel filter 65 is protected by the cover 68 from flying and splashing stone and mud, thereby to be prevented from being damaged. The cover 68 has a projection 68a formed on an upper part thereof and projecting upward, and a through-hole 68b in the fore and aft direction of the projection 68a. Preferably, the cover 68 is formed of an elastic element such as rubber, for example. The fuel filter 65 has finer meshes than the internal fuel filter in the fuel tank 15. Consequently, the fuel filter 65 attached to the body frame 2 is changed with a higher frequency than the internal filter, which reduces the troublesomeness of filter changing.

The intake nozzle 65b and discharge nozzle 65c are formed along the central axis C of the filter body 65a. Since the central axis of the fuel filter 15 extends transversely of the vehicle body, the intake nozzle 65b and discharge nozzle 65c are also arranged in the transverse direction. Consequently, joining and disjoining of the intake nozzle 65b and fuel hose 69 and joining and disjoining of the discharge nozzle 65c and fuel hose 71 can be done laterally of the vehicle body, which facilitates removal of the fuel hoses 69 and 71.

The fuel filter 65 is attached by fitting with the bracket 81. Because of the plug-in type attachment and detachment of the fuel filter 65, the fuel filter 65 can be removed from the bracket 81 easily. The plugging direction of the fuel filter 65 is the longitudinal direction of the vehicle body. Consequently, the fuel filter 65 can be extracted easily from the bracket 81 by accessing the fuel filter 65 from a side of the vehicle body, and moving the fuel filter 65 in the longitudinal direction of the vehicle body.

The bracket 81 includes a plate-like main body 81a extending transversely of the vehicle body, a plate-like lug 81b extending rearward from the main body 81a, and a recess 81c in form of a rearward dent in a front part at one end of the main body 81a. The fuel filter 65 is fixed to the bracket 81 by fitting the through-hole 68b of the cover 68 on the lug 81b of the bracket 81. Since the fuel filter 65 is fixable by fitting the through-hole 68b formed in the cover 68 on the lug 81b, the fuel filter 65 can be removed easily.

The intake nozzle 65b of the fuel filter 65 and the fuel hose 69 are connected by a first connector 84. The discharge nozzle 65c and the fuel hose 71 are connected by a second connector 85. The second connector 85 fixes the discharge nozzle 65c inserted in the fuel hose 71 by tightening from outside the fuel pipe 71.

The first connector 84 has an upper arm 84a and a lower arm 84b, the upper arm 84a and lower arm 84b being connected at the respective rear ends thereof. The upper arm 84a and lower arm 84b pinch, between central parts to rear parts thereof, the fuel hose 69 in which the intake nozzle 65b has been inserted. The respective forward ends of the upper arm 84a and lower arm 84b pinch therebetween the recess 81 of the bracket 81. The upper arm 84a and lower arm 84b are fixed by a screw 84c in this state. Since the fuel filter 65 has the connection between the intake nozzle 65b and fuel hose 69 fixed to the bracket 81 in this way, the filter 65 can be fixed to the bracket 81 with increased reliability. Consequently, even when the fuel filter 65 comes off the lug 81b by vibration, the fuel filter 65 is prevented from falling since it is fixed to the bracket 81 by the first connector 84.

Only the first connector 84 has the construction connectable to the bracket 81, and this can, when attaching the filter 65, prevent attachment with the upstream direction and downstream direction swapped. Further, the through-hole 68b is located leftward from the middle in the longitudinal direction of the fuel filter 65, and this results in different distances from the right end and the left end of the filter 65 to the through-hole 68b. This provides such a construction that, if the filter 65 were fixed, with its right and left reversed, to the bracket 81, a misalignment would occur between the recess 81 and the forward ends of the upper arm 84a and lower arm 84b of the first connector 84, which makes it impossible to connect the fuel hoses 69 and 71 and the filter 65.

Thus, the first connector 84 and second connector 85 of the fuel filter 65 have different shapes for attaching the fuel hoses 69 and 71. Consequently, the fuel filter 65 is prevented from being attached in a faulty way.

The fuel hoses 69 and 71 connected to the fuel filter 65 and the other fuel hoses 73 and 75 have flexibility. Rubber material is mentioned as an example of these fuel hoses. Consequently, since the fuel hoses 69 and 71 are deformable when removing the fuel filter 65, the fuel hoses 69 and 71 can be removed easily.

According to the two-wheeled motor vehicle 1 in this embodiment, the fuel filter 65, as seen from a side, is disposed in an area surrounded by the head tube 3, main frames 28 and down frame 33. Further, the fuel filter 65, as seen from a side, is disposed in a position not overlapping any one of the main frames 28, down frame 33 and engine 17. Consequently, when covers such as the cowls 26 and air scoops are removed from the body frame 2, the fuel filter 65 can be accessed from a side of the vehicle body, thereby to facilitate changing of the fuel filter 65. That is, the fuel filter 65 can be removed from the two-wheeled motor vehicle 1 only by removing the cowls 26 from the body frame 2, removing the fuel hoses 69 and 71 from the fuel filter 65, and pulling the fuel filter 65 off from the bracket 81. Thus, the fuel filter 65 can be changed without removing the fuel tank 15 from the main frames 28.

The pressure regulator 67 is disposed between the fuel filter 65 and fuel injection device 60. The fuel pump 63 and pressure regulator 67 are fixed to the fuel tank 65. When the fuel tank 65 is removed from the main frames 28, the pressure regulator 67 and fuel pump 63 can also be removed together. It is therefore not necessary to remove the fuel hose 73 connecting the fuel pump 63 and pressure regulator 67. The pressure regulator 67, because of the construction for carrying out pressure regulation, has the function of a check valve. The discharge nozzle 77 of the fuel pump 63 also has the function of a check valve. Therefore, without providing the fuel hoses 69, 71, 73 and 75 with check valves which prevent fuel leakage from the fuel pump 63, the fuel filter 65 can be changed and the fuel tank 15 can be removed with no fuel leakage.

The present teaching is not limited to the foregoing embodiment, but may be modified as follows:
(1) In the foregoing embodiment, the two-wheeled motor vehicle is described as saddle riding type vehicle, but this is not limitative. For example, a change may be made to a three-wheeled vehicle having two front wheels, or a three-wheeled vehicle having two rear wheels. Or a change may be made to a four-wheeled vehicle. In such modified embodiments, the construction of front forks 4 can be selected or varied as appropriate.
(2) The foregoing embodiment provides two fuel filters, ie the fuel filter inside the fuel tank 15 and the fuel filter 65 outside the fuel tank 15. However, the invention may provide only the fuel filter 65 disposed outside the fuel tank 15.

## Claims

1. A saddle riding type vehicle comprising:
a head tube (3);
main frames (28) connected to the head tube (3);
a down frame (33) connected to the head tube (3) and disposed below the main frames (28);
a fuel tank (15) placed on the main frames (28);
a fuel pump (63) which is partly contained in the fuel tank (15), wherein the fuel pump (63) is inserted into the fuel tank (15) from the bottom thereof, a lower part of the fuel pump (63) is exposed outside the fuel tank (15),
an engine (17) suspended from the main frames (28) and including a cylinder (52) extending upward and inclined forward; and
a fuel injection device (60) disposed rearward of the cylinder (52) of the engine (17);
subframes (45) connecting the main frames (28) and the down frame (33);
a fuel filter (65) which is arranged within a space between the fuel tank (15) and a cylinder head (53) of the engine (17) using the space under the fuel tank (15) for feeding fuel discharged from fuel pump (63) forward to pass through the fuel filter (65) and a pressure regulator (67), and again to pass through an area below the fuel pump (63);
the fuel filter (65) is arranged in front of the fuel pump (63);
a fuel hose (69) connecting the fuel pump (63) and the fuel filter (65);
a fuel hose (71) connecting the fuel filter (65) and the pressure regulator (67), a fuel hose (73) connecting the pressure regulator (67) and the fuel pump (63), and a fuel hose (75) connecting the pressure regulator (67) and fuel injection device (60),
wherein
the fuel filter (65) is attached below the subframes (45),
the fuel filter (65), as seen from a side, is disposed in an area surrounded by the head tube (3), the main frames (28) and the down frame (33), and in a position not overlapping any one of the main frames (28), the down frame (33) and the engine (17).

2. A saddle riding type vehicle according to claim 1, wherein the fuel filter (65) has a cylindrical shape and has a central axis (C) extending transversely of a vehicle body.

3. A saddle riding type vehicle according to claim 1 or 2, further comprises
a bracket (81) extending downward from the subframes (45);
wherein the fuel filter (65) is attached to the subframes (45) through the bracket (81).

4. A saddle riding type vehicle according to claim 3, wherein the fuel filter (65) is covered with an elastic element (68), and is inserted in and attached to the bracket (81).

5. A saddle riding type vehicle according to claim 4, wherein the fuel filter (65) has a direction of insertion corresponding to a longitudinal direction of the vehicle body.

6. A saddle riding type vehicle according to claim 5, wherein the elastic element (68) has
a through-hole (68b); and
the bracket (81) has a lug (81b);
wherein the fuel filter (65) is fixed to the bracket (81) by inserting the lug (81b) in the through-hole (68b).

7. A saddle riding type vehicle according to any one of claims 1 to 6, wherein fuel hoses (69,71) connected to the fuel filter (65) have flexibility.

8. A saddle riding type vehicle according to any one of claims 1 to 7, wherein the fuel filter (65) is disposed in a position overlapping the down frame (33) as seen from front.

9. A saddle riding type vehicle according to any one of claims 1 to 8, wherein the fuel pump (63) and the pressure regulator (67) are fixed to the fuel tank (15).

10. A saddle riding type vehicle according to any one of claims 3 to 6, wherein the fuel filter (65) has different hose-attaching shapes in an upstream direction and a downstream direction.

11. A saddle riding type vehicle according to claim 10, further comprises connectors for connecting the fuel filter (65) and the fuel hoses (69,71,73,75);
wherein one of the connectors in the upstream direction and the downstream direction is connected also to the bracket (81).

12. A saddle riding type vehicle according to any one of claims 1 to 11, wherein, as seen from above, at least one end of a connection width of the fuel filter (65) and the fuel hoses (69,71) is located outward of the main frames (28) in the transverse direction of the vehicle body.

## Patentansprüche

1. Ein Sattel-Reit-Typ-Fahrzeug, das umfasst:
einem Kopf-Rohr (3);
Haupt-Rahmen (28), die mit dem Kopf-Rohr (3) verbunden sind;
einen Unter-Rahmen (33), der mit dem Kopf-Rohr (3) verbunden ist und unterhalb des Haupt-Rahmens (28) positioniert ist;
einen Kraftstoff-Tank (15), der sich auf den Haupt-Rahmen (28) befindet;
eine Kraftstoff-Pumpe (63), die teilweise in dem Kraftstoff-Tank (15) enthalten ist, wobei die Kraftstoff-Pumpe (63) in den Kraftstoff-Tank (15) von dessen Boden her eingesetzt ist, wobei ein unterer Teil der Kraftstoff-Pumpe (63) außerhalb des Kraftstoff-Tanks (15) freiliegt,
einen Motor (17), der an dem Haupt-Rahmen (28) aufgehängt ist und einen Zylinder (52) beinhaltet, der sich nach oben erstreckt und nach vorne geneigt ist; und
eine Kraftstoff-Einspritz-Vorrichtung (60), die hinter dem Zylinder (52) von dem Motor (17) angeordnet ist;
Teil-Rahmen (45), welche die Haupt-Rahmen (28) und den Unter-Rahmen (33) verbinden;
einen Kraftstoff-Filter (65), der in einem Raum zwischen dem Kraftstoff-Tank (15) und einem Zylinder-Kopf (53) des Motors (17) angeordnet ist, unter Verwendung des Raums unter dem Kraftstoff-Tank (15), zum Vorwärts-Fördern von Kraftstoff, der von der Kraftstoff-Pumpe (63) abgegeben wird, um durch den Kraftstoff-Filter (65) und einen Druck-Regler (67) hindurch zu treten, und wieder durch einen Bereich unterhalb der Kraftstoff-Pumpe (63) hindurch zu treten;
der Kraftstoff-Filter (65) ist vor der Kraftstoff-Pumpe (63) angeordnet;
einen Kraftstoff-Schlauch (69), der die Kraftstoff-Pumpe (63) und den Kraftstoff-Filter (65) verbindet;
einen Kraftstoff-Schlauch (71), der den Kraftstoff-Filter (65) und den Druck-Regler (67) verbindet, einen Kraftstoff-Schlauch (73), der den Druck-Regler (67) und die Kraftstoff-Pumpe (63) verbindet, und einen Kraftstoff-Schlauch (75), der den Druck-Regler (67) und die Kraftstoff-Einspritz-Vorrichtung (60) verbindet, wobei der Kraftstoff-Filter (65) unterhalb der Teil-Rahmen (45) angebracht ist,
der Kraftstoff-Filter (65), von einer Seite gesehen, in einem Bereich angeordnet ist, der von dem Kopf-Rohr (3), den Haupt-Rahmen (28) und dem Unter-Rahmen (33) umgeben ist, und in einer Position, welche die Haupt-Rahmen (28), den Unter-Rahmen (33) und den Motor (17) nicht überlappt.

2. Ein Sattel-Reit-Typ-Fahrzeug gemäß Anspruch 1, wobei der Kraftstoff-Filter (65) eine zylindrische Form hat und eine zentrale Achse (C) hat, die sich quer zu einem Fahrzeug-Körper erstreckt.

3. Ein Sattel-Reit-Typ-Fahrzeug gemäß Anspruch 1 oder 2, das weiterhin umfasst
eine Klammer (81), die sich von den Teil-Rahmen (45) nach unten erstreckt;
wobei der Kraftstoff-Filter (65) an den Teil-Rahmen (45) über die Klammer (81) angebracht ist.

4. Ein Sattel-Reit-Typ-Fahrzeug gemäß Anspruch 3, wobei der Kraftstoff-Filter (65) mit einem elastischen Element (68) abgedeckt ist, und in die Klammer (81) eingesetzt und daran angebracht ist.

5. Ein Sattel-Reit-Typ-Fahrzeug gemäß Anspruch 4, wobei der Kraftstoff-Filter (65) eine Richtung des Einsetzens hat, die einer Längs-Richtung dem Fahrzeug-Körper entspricht.

6. Ein Sattel-Reit-Typ-Fahrzeug gemäß Anspruch 5, wobei das elastische Element (68)
ein Durchgangs-Loch (68b) hat; und
die Klammer (81) hat eine Lasche (81b);
wobei der Kraftstoff-Filter (65) an der Klammer (81) durch Einsetzen der Lasche (81b) in das Durchgangs-Loch (68b) fixiert ist.

7. Ein Sattel-Reit-Typ-Fahrzeug gemäß irgendeinem der Ansprüche 1 bis 6, wobei die Kraftstoff-Schläuche (69, 71), die mit dem Kraftstoff-Filter (65) verbunden sind, Flexibilität haben.

8. Ein Sattel-Reit-Typ-Fahrzeug gemäß irgendeinem der Ansprüche 1 bis 7, wobei der Kraftstoff-Filter (65) in einer Position angeordnet ist, die den Rahmen (33) überlappt, wenn von vorne gesehen.

9. Ein Sattel-Reit-Typ-Fahrzeug gemäß irgendeinem der Ansprüche 1 bis 8, wobei die Kraftstoff-Pumpe (63) und der Druck-Regler (67) am Kraftstoff-Tank (15) fixiert sind.

10. Ein Sattel-Reit-Typ-Fahrzeug gemäß irgendeinem der Ansprüche 3 bis 6, wobei der Kraftstoff-Filter (65) unterschiedliche Schlauch-Anbringungs-Formen in einer Stromauf-Richtung und einer Stromab-Richtung hat.

11. Ein Sattel-Reit-Typ-Fahrzeug gemäß Anspruch 10, das weiter Verbinder zum Verbinden des Kraftstoff-Filters (65) und der Kraftstoff-Schläuche (69, 71, 73, 75) aufweist;
wobei einer der Verbinder in der Stromauf-Richtung und in der Stromab-Richtung ebenfalls mit der Klammer (81) verbunden ist.

12. Ein Sattel-Reit-Typ-Fahrzeug gemäß irgendeinem der Ansprüche 1 bis 11, wobei, von oben gesehen, zumindest ein Ende einer Verbindungs-Breite von dem Kraftstoff-Filter (65) und der Kraftstoff-Schläuche (69, 71) außerhalb von den Haupt-Rahmen (28) in der Quer-Richtung des Fahrzeug-Körpers angeordnet ist.

## Revendications

1. Véhicule de type à selle comprenant :
un tube de tête (3) ;
des châssis principaux (28) connectés au tube de tête (3) ;
un châssis inférieur (33) connecté au tube de tête (3) et disposé sous les châssis principaux (28) ;
un réservoir de carburant (15) placé sur les châssis principaux (28) ;
une pompe à carburant (63) qui est partiellement contenue dans le réservoir de carburant (15), dans lequel la pompe à carburant (63) est insérée dans le réservoir de carburant (15) depuis le fond de celui-ci, une partie inférieure de la pompe à carburant (63) étant exposée à l'extérieur du réservoir de carburant (15),
un moteur (17) suspendu aux châssis principaux (28) et comprenant un cylindre (52) qui s'étend vers le haut et incliné vers l'avant ; et
un dispositif d'injection de carburant (60) disposé à l'arrière du cylindre (52) du moteur (17) ;
des sous-châssis (45) qui connectent les châssis principaux (28) au châssis inférieur (33) ;
un filtre à carburant (65) qui est agencé dans un espace entre le réservoir de carburant (15) et une culasse (53) du moteur (17) en utilisant l'espace sous le réservoir de carburant (15) pour alimenter le carburant refoulé par la pompe à carburant (63) vers l'avant pour traverser le filtre à carburant (65) et un régulateur de pression (67), et pour traverser de nouveau une zone sous la pompe à carburant (63) ;
le filtre à carburant (65) agencé devant la pompe à carburant (63) ;
un tuyau à carburant (69) connectant la pompe à carburant (63) au filtre à carburant (65) ;
un tuyau à carburant (71) connectant le filtre à carburant (65) au régulateur de pression (67), un tuyau à carburant (73) connectant le régulateur de pression (67) à la pompe à carburant (63), et un tuyau à carburant (75) connectant le régulateur de pression (67) au dispositif d'injection de carburant (60),
dans lequel
le filtre à carburant (65) est attaché sous les sous-châssis (45),
le filtre à carburant (65), en vue latérale, est disposé dans une zone entourée par le tube de tête (3), les châssis principaux (28) et le châssis inférieur (33), et dans une position qui ne chevauche aucun élément parmi les châssis principaux (28), le châssis inférieur (33) et le moteur (17).

2. Véhicule de type à selle selon la revendication 1, dans lequel le filtre à carburant (65) présente une forme cylindrique et comporte un axe central (C) qui s'étend transversalement par rapport au corps de véhicule.

3. Véhicule de type à selle selon la revendication 1 ou 2, comprenant en outre un support (81) qui s'étend vers le bas depuis les sous-châssis (45) ;
dans lequel le filtre à carburant (65) est attaché aux sous-châssis (45) à travers le support (81).

4. Véhicule de type à selle selon la revendication 3, dans lequel le filtre à carburant (65) est recouvert par un élément élastique (68), et est inséré dans le support (81) et attaché à celui-ci.

5. Véhicule de type à selle selon la revendication 4, dans lequel le filtre à carburant (65) a une direction d'insertion qui correspond à la direction longitudinale du corps de véhicule.

6. Véhicule de type à selle selon la revendication 5, dans lequel l'élément élastique (68) comporte un trou traversant (68b) ; et
le support (81) comporte une patte (81b) ;
dans lequel le filtre à carburant (65) est fixé au support (81) en insérant la patte (81b) dans le trou traversant (68b).

7. Véhicule de type à selle selon l'une quelconque des revendications 1 à 6, dans lequel des tuyaux à carburant (69, 71) connectés au filtre à carburant (65) sont flexibles.

8. Véhicule de type à selle selon l'une quelconque des revendications 1 à 7, dans lequel le filtre à carburant (65) est disposé dans une position qui chevauche le châssis inférieur (33) en vue de l'avant.

9. Véhicule de type à selle selon l'une quelconque des revendications 1 à 8, dans lequel la pompe à carburant (63) et le régulateur de pression (67) sont fixés au réservoir de carburant (15).

10. Véhicule de type à selle selon l'une quelconque des revendications 3 à 6, dans lequel le filtre à carburant (65) présente des formes d'attachement de tuyau différentes en direction amont et en direction aval.

11. Véhicule de type à selle selon la revendication 10, comprenant en outre des connecteurs pour connecter le filtre à carburant (65) aux tuyaux à carburant (69, 71, 73, 75) ;
dans lequel l'un des connecteurs en direction amont et en direction aval est connecté également au support (81).

12. Véhicule de type à selle selon l'une quelconque des revendications 1 à 11 dans lequel, en vue du dessus, au moins une extrémité d'une largeur de connexion du filtre à carburant (65) et des tuyaux à carburant (69, 71) est située hors des châssis principaux (28) en direction transversale du corps de véhicule.
